# EUROPEAN PATENT SPECIFICATION

(11) **EP 2 294 916 B1**
(45) Date of publication and mention of the grant of the patent: **03.07.2013**
(21) Application number: 10176306.8
(22) Date of filing: 10.09.2010
(51) Int. Cl.: A01K 31/22

(54) **Housing device for chickens**
Geflügelstall
Étable pour volaille

(30) Priority: 10.09.2009 NL 2003463
(43) Date of publication of application: 16.03.2011
(73) Proprietor: Van de Ven Beheer B.V., 5521 DZ Eersel (NL)
(72) Inventor: van de Ven, Cornelis Antonius Wilhelmus, 5521 DZ, Eersel (NL)
(74) Representative: Verhees, Godefridus Josephus Maria

(56) References cited:
- EP-A2- 1 813 147
- NL-C- 1 024 938
- NL-C2- 1 008 719

## Description

### Field of the invention.

The invention relates to a system of keeping poultry, comprising a lower tier as well as an upper tier positioned at a higher level beside this lower tier, which upper tier is provided with an edge oriented towards the lower tier via which edge the hens can reach the upper tier from the lower tier, which system further includes a displaceable partition that has a lower edge and can be displaced between a lowest position in which the lower edge has a first distance to the edge of the upper tier and an highest position in which the lower edge has a second distance to the edge of the upper tier, the second distance exceeding the first distance and the second distance being such that the hens can hop or fly from the lower tier to the upper tier while passing under the partition.

### State of the art.

A system of keeping poultry of this type is known from NL 1008719. The partition of this known system of keeping poultry is used for retaining the heat on the upper tier. A disadvantage of this known system is that the hens lay eggs both on the lower tier and on the upper tier so that the eggs are to be collected throughout the whole system.

### Summary of the invention.

It is an object of the invention to provide a system of keeping poultry of the type defined in the opening paragraph in which the eggs can be collected in a simpler manner. To this end the system according to the invention is characterized in that the first distance is such that the hens cannot hop or fly from the lower tier to the upper tier while passing under the partition, but that the hens can certainly hop or fly from the upper tier to the lower tier while passing under the partition. By luring the hens to the lower tier before they start laying eggs and then seeing to it that they cannot reach the upper tier any longer, the hens can lay eggs only on the lower tier so that the eggs need to be collected only from this tier. The hens may be lured for example by installing the feeder pans only on the lower tier. When the feeder pans are filled with feed the hens present on the upper tier will come down. It has turned out that not all hens immediately go down to the feeder pans during feeding time. With this system the hens can always go from the upper tier to the lower tier, but in the lowest position of the partition they cannot go back up to the upper tier again. Needless to observe that other options are also conceivable to lure the animals downward, inter alia by means of light or water.

An embodiment of the system according to the invention is characterized in that the partition is hingeably suspended from an upper edge.

To avoid that hens are in exceptional cases capable of nevertheless reaching the upper tier from the lower tier, a further embodiment of the system according to the invention is characterized in that the turning of the partition around the hinge shaft in a direction turned away from the lower tier can be blocked, so that the hens coming from the lower tier cannot push away the partition from the lower tier, but can do so coming from the upper tier.

A further embodiment of the system according to the invention is characterized in that the partition is a roller blind.

Yet a further embodiment of the system according to the invention is characterized in that the partition is weighted at the lower edge.

Preferably a feeder pan and/or dust bath for poultry are located on the second tier.

The system according to the invention is pre-eminently suitable if a feeder pan and/or dust bath for poultry are located on the second tier. Hens are fond of dwelling in a feeder pan and/or dust bath, so that more particularly in such a system a displaceable partition is desired to provide that the hens, after having had their meal, do not return to the dust bath and lay their eggs at that location.

### Brief description of the drawings.

The invention will now be described in more detail based on an example of embodiment shown in the drawing figures of the system of keeping poultry according to the invention, in which:
Fig. 1 shows the system with the partition in the lowest position; and
Fig. 2 shows the system with the partition in the highest position.

### Detailed description of the drawings.

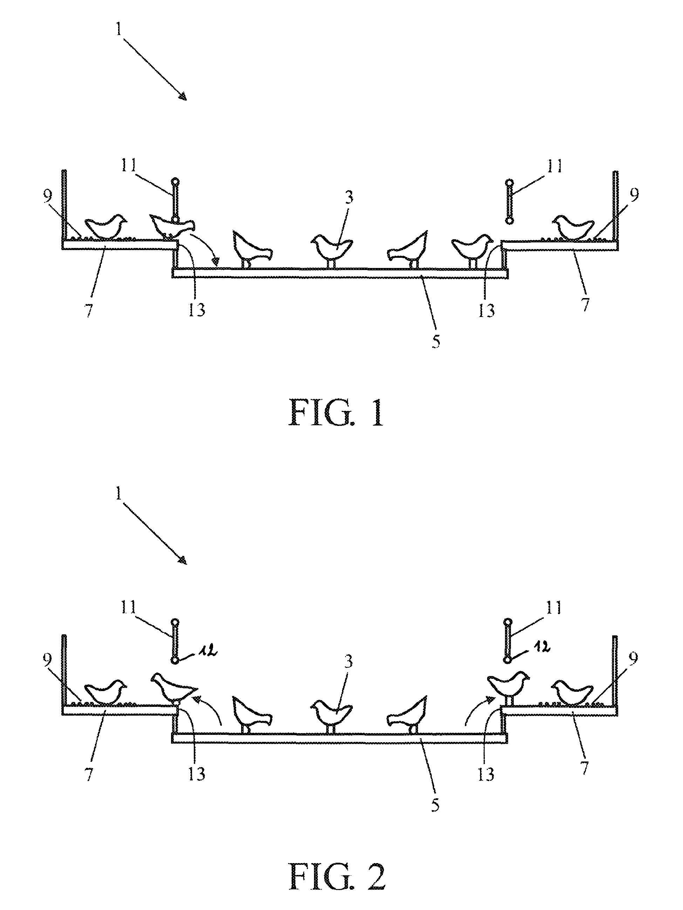

Figs. 1 and 2 show an embodiment of the system 1 of keeping poultry 3 according to the invention with the partition in the lowest position and higest position respectively. The system 1 has a lower tier 5 and two upper tiers 7 beside it, which are located at a higher level than the lower tier. Feeder pans and/or dust baths 9 for the hens 3 are located on the upper tiers 7.

The system 1 further includes displaceable partitions 11 which have lower edges 12 which can be moved to and from the edges 13 of the upper tiers 7 facing the lower tier 5. The hens 3 can hop from the lower tier to the upper tier and vice versa via these edges 13 of the lower tier.

The partitions 11 can be moved between a lowest position (see Fig. 1) at a first distance above the upper tiers 7, and a highest position (see Fig. 2) at a second, greater distance than the lowest position above the upper tiers 7. In the lowest position of the partitions 11 the hens 3 cannot fly or hop from the lower tier 5to the upper tiers 7 while passing under the partition 11, but they can reach the lower tier 5 from upper tiers 7 while passing under the partitions 11. In the highest position the hens 3 can hop or fly from the lower tier 5 to the upper tiers 7 while passing under the partitions.

Albeit the invention described above has been described with reference to the drawings, it should be noted that the invention is not by any manner or means restricted to the embodiment shown in the drawings. The invention also extends to all embodiments deviating from the embodiment shown in the drawings within the scope defined by the claims.

## Claims

1. A system (1) of keeping poultry (3), comprising a lower tier (5) as well as an upper tier (7) positioned at a higher level beside this lower tier, which upper tier is provided with an edge (13) oriented towards the lower tier via which edge the hens can reach the upper tier from the lower tier, which system further includes a displaceable partition (11) that has a lower edge (12) and can be displaced between a lowest position in which the lower edge has a first distance to the edge of the upper tier and an highest position in which the lower edge has a second distance to the edge of the upper tier, the second distance exceeding the first distance and the second distance being such that the hens can hop or fly from the lower tier to the upper tier while passing under the partition, **characterized in that** the first distance is such that the hens cannot hop or fly from the lower tier (5) to the upper tier (7) while passing under the partition (11), but that the hens can certainly hop or fly from the upper tier to the lower tier while passing under the partition.

2. A system (1) as claimed in claim 1, **characterized in that** the partition (11) is hingeably suspended from an upper edge.

3. A system (1) as claimed in claim 2, **characterized in that** the turning of the partition (11) around the hinge shaft in a direction turned away from the lower tier (5) can be blocked, so that the hens coming from the lower tier cannot push away the partition from the lower tier, but can do so coming from the upper tier (7).

4. A system (1) as claimed in claim 1, **characterized in that** the partition (11) is a roller blind.

5. A system (1) as claimed in claim 1, **characterized in that** the partition (11) is weighted at the lower edge (12).

6. A system (1) as claimed in any one of the preceding claims, **characterized in that** a feeder pan and/or dust bath for poultry are located on the second tier (7).

## Patentansprüche

1. Einrichtung (1) für die Haltung von Hühnern (3) mit einer unteren Aufenthaltsfläche (5) sowie einer neben dieser unteren Aufenthältsfläche befindlichen höher gelegenen Aufenthaltsfläche (7), versehen mit einem zur unteren Aufenthaltsfläche zugewandten Rand (13), über den die Hühner von der unteren auf die obere Aufenthaltsfläche gelangen können, welche Einrichtung ferner eine bewegliche Abtrennung (11) mit einem unteren Rand (12) umfasst, verstellbar zwischen der unteren Stellung, wobei der untere Rand sich in einem ersten Abstand vom Rand der oberen Aufenthaltsfläche befindet, und der oberen Stellung, wobei der untere Rand sich in einem zweiten Abstand vom Rand der oberen Aufenthaltsfläche befindet, wobei der zweite Abstand größer ist als der erste Abstand und der zweite Abstand so ist, dass die Hühner von der unteren Aufenthaltsebene unter der Abtrennung hindurch auf die obere Aufenthaltsfläche springen oder fliegen können, **dadurch gekennzeichnet, dass** der erste Abstand so ist, dass die Hühner nicht von der unteren Aufenthaltsfläche (5) unter der Abtrennung (11) hindurch auf die obere Aufenthaltsfläche (7) springen oder fliegen können, die Hühner aber wohl von der oberen Aufenthaltsfläche unter der Abtrennung hindurch auf die untere Aufenthaltsfläche springen oder fliegen können.

2. Einrichtung (1) gemäß Patentanspruch 1, **dadurch gekennzeichnet, dass** die Abtrennung (11) mit einem oberen Rand schwenkbar aufgehängt ist.

3. Einrichtung (1) gemäß Patentanspruch 2, **dadurch gekennzeichnet, dass** die Verdrehung der Abtrennung (11) um die Gelenkachse, in einer von der unteren Aufenthaltsfläche (5) abgewandten Richtung gesperrt werden kann, wodurch die von der unteren Aufenthaltsfläche kommenden Hühner die Abtrennung nicht wegdrücken können, was von der oberen Aufenthaltsfläche (7) kommend möglich ist.

4. Einrichtung (1) gemäß Patentanspruch 1, **dadurch gekennzeichnet, dass** die Abtrennung (11) ein Rollo ist.

5. Einrichtung (1) gemäß einer der vorherigen Patentansprüche, **dadurch gekennzeichnet, dass** die Abtrennung (11) am unteren Rand (12) versteift ist.

6. Einrichtung (1) gemäß einer der vorherigen Patentansprüche, **dadurch gekennzeichnet, dass** auf der zweiten Aufenthaltsebene (7) ein Behälter zum Scharren und/oder ein Staubbad für das Federvieh vorhanden ist.

## Revendications

1. Dispositif (1) pour l'élevage de poules (3), comprenant un plateau habitable inférieur (5), ainsi qu'un plateau habitable supérieur (7) situé près de ce plateau inférieur à un niveau plus élevé et pourvu d'un bord (13) tourné vers le plateau habitable inférieur, bord par l'intermédiaire duquel les poules peuvent passer du plateau habitable inférieur au plateau habitable supérieur, lequel dispositif comprend en outre une cloison mobile (11) pourvue d'un bord inférieur (12) et étant mobile entre une position inférieure pour laquelle le bord inférieur se trouve à une première distance du bord du plateau habitable supérieur, et une position supérieure pour laquelle le bord inférieur se trouve à une deuxième distance du bord du plateau habitable supérieur, où la deuxième distance est plus grande que la première distance et la deuxième distance est telle que les poules peuvent sauter ou voler depuis le plateau habitable inférieur vers le plateau habitable supérieur en passant sous la cloison, **caractérisé en ce que** la première distance est telle que les poules ne peuvent pas sauter ou voler depuis le plateau habitable inférieur (5) vers le plateau habitable supérieur (7) en passant sous la cloison (11), mais que les poules peuvent par contre sauter ou voler depuis le plateau habitable supérieur vers le plateau habitable inférieur en passant sous la cloison.

2. Dispositif (1) selon la revendication 1, **caractérisé en ce que**, en son bord supérieur, la cloison (11) est suspendue à l'aide de charnières.

3. Dispositif (1) selon la revendication 2, **caractérisé en ce que** la torsion de la cloison (11) autour de l'axe de charnière peut être bloquée dans une direction opposée à celle du plateau habitable inférieur (5), en conséquence de quoi les poules venant du plateau habitable inférieur ne peuvent pas repousser la cloison, alors que celles venant du plateau habitable supérieur (7) le peuvent.

4. Dispositif (1) selon la revendication 1, **caractérisé en ce que** la cloison (11) est un store.

5. Dispositif (1) selon une des revendications précédentes, **caractérisé en ce que** la cloison (11) est plus lourde en son bord inférieur (12).

6. Dispositif (1) selon une des revendications précédentes, **caractérisé en ce que**, sur le deuxième plateau habitable (7), se trouve un parquet d'élevage et/ou un bain de poussière pour volaille.
